# EUROPEAN PATENT SPECIFICATION

(11) **EP 4 426 166 B1**
(45) Date of publication and mention of the grant of the patent: **01.10.2025**
(21) Application number: 22803381.7
(22) Date of filing: 26.10.2022
(51) Int. Cl.: A47J 27/18

(54) **PASTA COOKING MACHINE**
TEIGWARENKOCHMASCHINE
APPAREIL DE CUISSON DE PÂTES

(30) Priority: 03.11.2021 IT 202100028043
(43) Date of publication of application: 11.09.2024
(73) Proprietor: Limitless S.r.l., 06034 Foligno (PG) (IT)
(72) Inventor: CESCA, Adriana, 06034 Foligno (PG) (IT)
(74) Representative: Cutropia, Gianluigi
(86) International application number: PCT/IB2022/060269
(87) International publication number: WO 2023/079409

(56) References cited:
- WO-A2-03/003886
- US-A- 5 070 774
- US-B1- 6 360 652

## Description

The present invention relates to a pasta cooking machine.

As it is known, pasta is cooked in boiling water and then is drained in order to be served with a sauce. For this purpose, pots are known, which are suitable for being filled with water and placed on a heat source such as a gas or electric stove, as well as colanders wherein the cooking water of the pasta is drained once the pasta cooking is completed. It seems evident that, although they ensure an excellent product quality, said traditional cooking and draining systems require quite a high amount of time, labor, water, and energy and therefore are not suitable for large-scale catering.

Pasta cooking devices comprising tubs filled with water heated by electric heating elements are known in large-scale catering. A grill-shaped colander is arranged in each tub. When the pasta cooking is finished, the operator must lift the colander to bring the drained pasta onto a tray. Such an operation is unhygienic, complicated and tiring, especially in the case of large quantities of pasta. Generally, the water in the tub is reused several times, and consequently the pasta cooked in recycled water will have a lower quality. On the other hand, it should be considered that the operation of replacing the water in the tub takes a lot of time and energy and is rarely performed.

For this reason, generally speaking, large-scale catering makes use of precooked or frozen pastas that undergo heating or tempering in microwave and/or infrared ovens. Obviously, the product obtained by such a process has poor quality. In addition, this process is not appropriate from a hygienic point of view and has high energy and personnel costs.

US5070774A discloses a machine for cooking food products, in particular pasta, rapidly and automatically.

The purpose of the present invention is to eliminate the drawbacks of the prior art by providing a pasta cooking machine that is efficient, effective, and capable of providing a high quality product

Another purpose is to provide such a pasta cooking machine that is easy to use and minimizes labor and energy waste.

An additional purpose is to provide such a machine that is reliable and guarantees excellent hygienic standards for pasta cooking.

These purposes are achieved in accordance with the invention with the features of the appended independent claim 1.

Advantageous achievements of the invention appear from the dependent claims.

Further features of the invention will appear clearer from the following detailed description, referring to a purely illustrative and therefore non-limiting embodiment thereof, illustrated in the appended drawings, wherein:
Fig. 1 is a block diagram schematically illustrating a pasta cooking machine according to the invention;
Fig. 2 is an enlarged detail of the diagram of Fig. 1 illustrating a cooking unit;
Fig. 3 is a perspective rendering view of a shutter of a first valve of the machine of Fig. 1;
Fig. 4 is a sectioned perspective rendering view of the shutter of the first valve of Fig. 3;
Fig. 5 is an axial sectional view of the first valve with the shutter in an open position for feeding the pasta to be cooked;
Fig. 5A is an axial exploded sectional view of the first valve in the open position of Fig. 5;
Fig. 6 is an axial sectional view of the first valve with the shutter in a closed position for cooking the pasta;
Fig. 6A is an axial exploded sectional view of the first valve in the closed position of Fig. 6;
Fig. 7 is an axial sectional view of a third valve with the shutter in a closed position for draining the pasta;
Fig. 7A is an axial exploded sectional view of the third valve in the closed position of Fig. 7;
Figs. 8 and 9 are two sectional perspective rendering views of the third valve in the closed position, during a first and a second draining stage;
Fig. 10 is an axial sectional view of the third valve with the shutter in an open position, for dispensing the cooked and drained pasta; and
Fig. 10A is an axial exploded sectional view of the third valve in the open position of Fig. 10.

With the aid of the Figures, a pasta cooking machine is described, according to the invention, which is shown collectively under reference numeral 100.

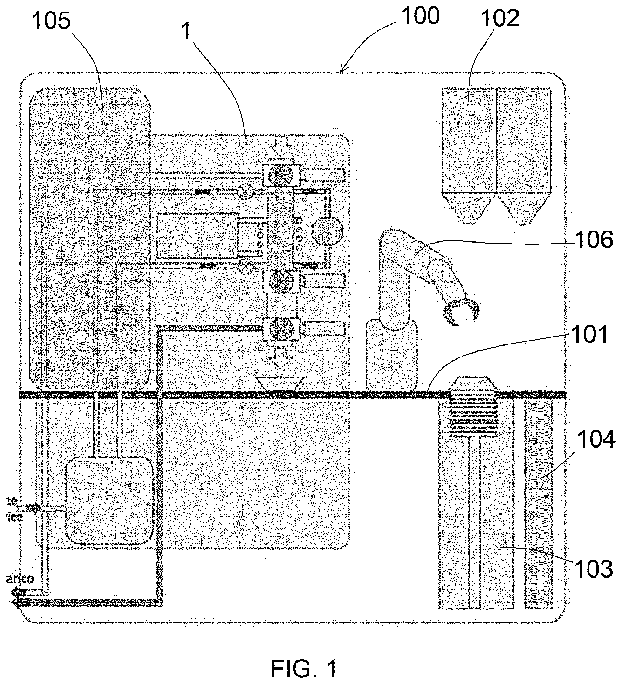

With reference to Fig. 1, the machine (100) comprises a cooking unit (1) suitable for cooking the pasta in boiling water. The cooking unit (1) receives raw pasta and cooks and drains the pasta, dispensing cooked and drained pasta at the outlet. The cooking unit (1) can be arranged on a worktop (101).

Optionally, the machine can comprise one or more of the following dispensers: pasta dispenser (102), plate dispenser (103), cutlery dispenser (104), and condiment dispenser (105).

Considering the worktop (101) where the cooking unit (1) is arranged, the pasta dispenser (102) is mounted above the worktop, the plate and cutlery dispensers (103, 104) are mounted below the worktop, and the condiment dispenser (105) is mounted on the worktop (101).

A manipulator (106) is mounted on the worktop and is configured to take the pasta from the pasta dispenser (102) and feed it to the cooking unit (1), take plates and cutlery from the plate and cutlery dispensers (103, 104) and arrange them at an outlet of the cooking unit, and take a condiment from the condiment dispenser (105) and place it on the plate that received the cooked pasta from the cooking unit. The manipulator (106) can be an articulated arm, such as a six-axis arm or an anthropomorphic robot.

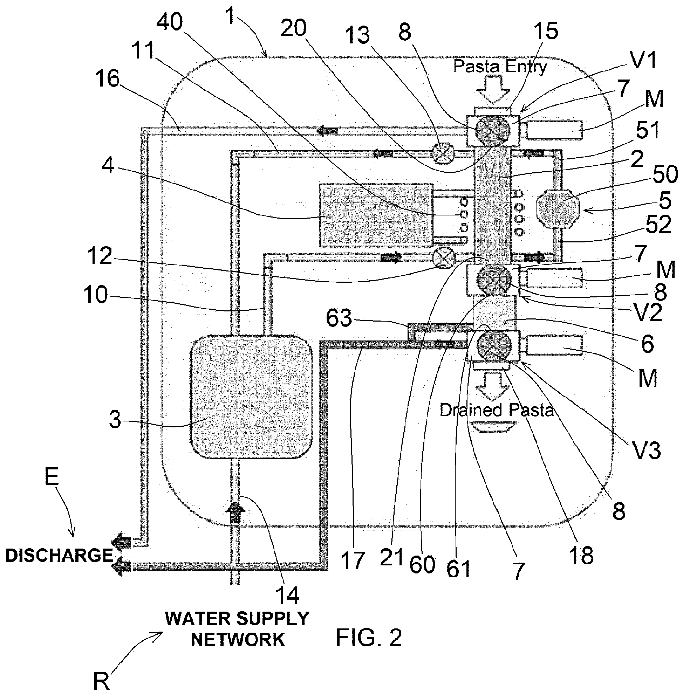

With reference to Fig. 2, the cooking unit (1) comprises an inlet (15) for feeding the pasta to be cooked and an outlet (18) from which cooked pasta is dispensed. The manipulator (106) is configured to take the pasta from the pasta dispenser (102) and feed it into the inlet (15) of the cooking unit (1), take the plates from the plate dispenser (103) and place them under the outlet (18) of the cooking unit.

The cooking unit (1) comprises a cooking chamber (2) suitable for being filled with water that is brought to the boil in order to cook the pasta. The cooking chamber (2) is connected to a boiler (3) by means of an inlet conduit (10) and an outlet conduit (11) for the entrance and the exit of hot water, respectively. An inlet valve (12) and an outlet valve (13) are arranged in the inlet conduit (10) and outlet conduit (11), respectively, to enable/disable the entrance and the exit of hot water into/from the cooking chamber (2).

The boiler (3) is connected to a water supply network (R) by means of a supply duct (14). The function of the boiler (3) is to preheat the water coming from the water mains to a temperature below the boiling temperature (e.g. to a temperature of about 90°C). In this way, hot water which can be quickly brought to the boil is fed into the cooking chamber (2).

A heater (4) heats the water in the cooking chamber (2) to bring it to the boiling temperature. The heater (4) is configured to heat the cooking chamber (2) so that the temperature inside the cooking chamber is higher than 100°, for example 120°. A temperature sensor and a pressure sensor are provided in the cooking chamber to control the temperature and the pressure of the cooking chamber and accordingly control the heater and the inlet and outlet valves so that the temperature is maintained around 120° and the pressure around 2-2.5 bar.

The heater (4) may comprise an electric heating element or an inductor (40).

A recirculation system (5) provides a recirculation of the hot water in the cooking chamber (2) during cooking. Such a recirculation allows for mixing the pasta and prevents pieces of pasta from sticking together. The recirculation system (5) comprises a pump (50) connected to the cooking chamber by means of a delivery duct (51) and a suction duct (52).

The cooking chamber (2) has an inlet (20) arranged superiorly and an outlet (21) arranged inferiorly.

A first valve (V1) is arranged at the inlet (20) of the cooking chamber. The first valve (V1) has a body (7) and a shutter (8) movably mounted in the body (7). The first valve (V1) is a three-way valve. The body (7) of the first valve is connected:
- to the inlet (15) for feeding the pasta to be cooked,
- to the inlet (20) of the cooking chamber, and
- to a steam discharge duct (16) connected to a drain (E) to drain the steam.

An actuator (M) is connected to the shutter (8) for a movement of the shutter of the first valve. The shutter (8) of the first valve can be moved in two positions:
- an open position, wherein it connects the inlet (15) with the cooking chamber (2) to feed the pasta into the cooking chamber, and
- a closed position, in which the inlet (15) is closed by the shutter, but the cooking chamber (2) is in communication with the steam discharge duct (16) to discharge the steam from the cooking chamber to the steam discharge duct (16).

A draining chamber (6) is arranged below the cooking chamber (2) to drain the cooking water. The draining chamber (6) has an inlet (60) arranged superiorly and an outlet (61) arranged inferiorly.

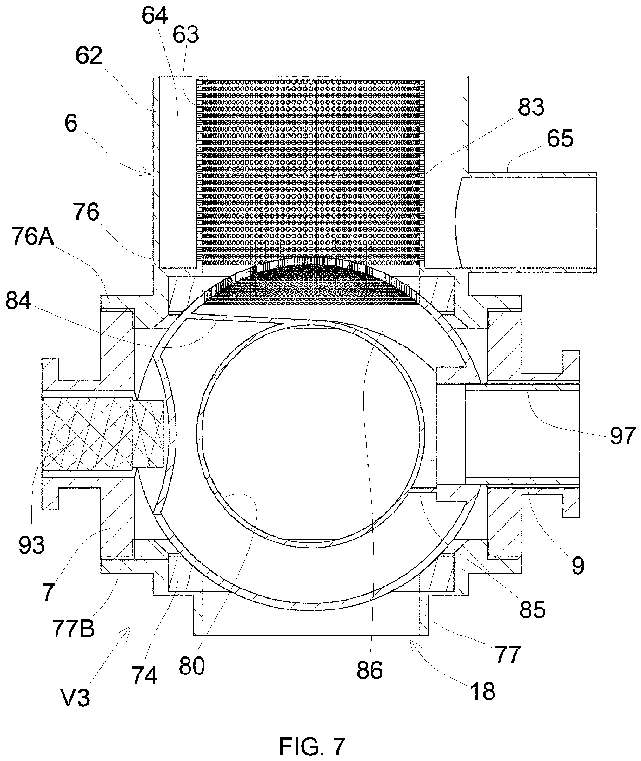

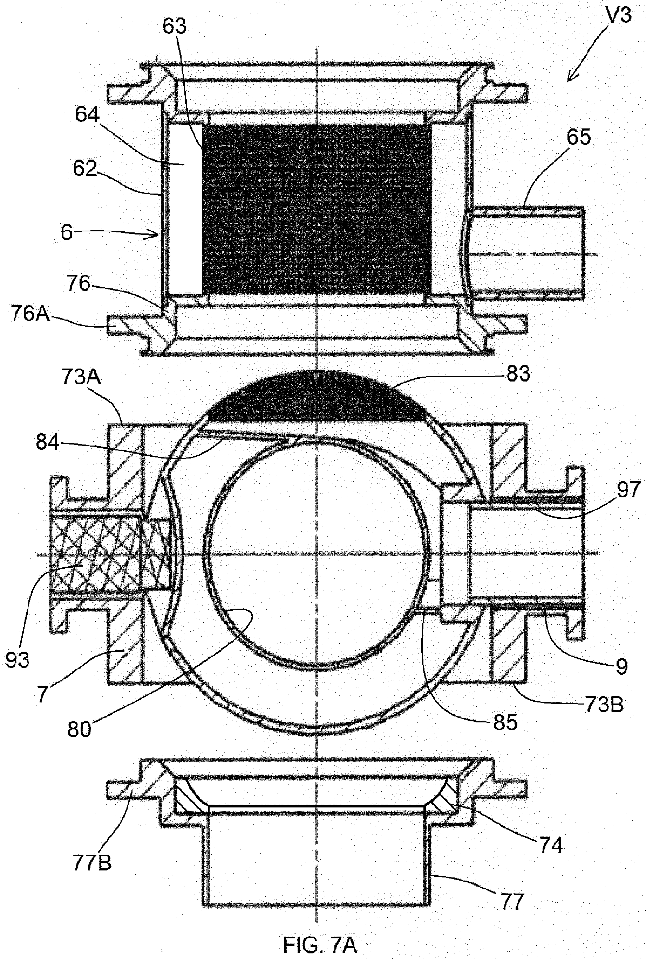

With reference to Fig. 7, the draining chamber (6) comprises an outer cylindrical body (62) and a cylindrical grill (63) arranged axially inside the outer cylindrical body (62), so as to leave a peripheral gap (64) between the cylindrical grill (63) and the outer cylindrical body (62). The cylindrical grill (63) has holes that allow the water to pass through, but do not allow the pasta to pass through. A connecting conduit (65) connects the peripheral gap (64) of the draining chamber with a water discharge duct (17) connected to a drain (E) for discharging the cooking water.

A second valve (V2) is arranged between the cooking chamber (2) and the draining chamber (6). The second valve (V2) has a body (7) and a shutter (8) movably mounted in the body. The second valve (V2) is a two-way valve. The body (7) of the second valve is connected:
- to the outlet (21) of the cooking chamber; and
- to the inlet (60) of the draining chamber.

The shutter (8) of the second valve (V2) is connected to an actuator (M) for a movement of the shutter of the second valve. The shutter (8) of the second valve can be moved in two positions:
- a closed position, wherein it closes the communication between the cooking chamber (2) and the draining chamber (6), and
- an open position, wherein it opens the communication between the cooking chamber (2) and the draining chamber (6).

A third valve (V3) is arranged at the outlet (61) of the draining chamber. The third valve (V3) has a body (7) and a shutter (8) movably mounted in the body (7). The third valve (V3) is a three-way valve. The body (7) of the third valve is connected:
- to the outlet (61) of the draining chamber,
- to the water discharge duct (17) connected to the drain (E) to discharge the cooking water, and
- to the outlet (18) to discharge the cooked and drained pasta.

An actuator (M) is connected to the shutter (8) for a movement of the third valve shutter. The shutter (8) of the third valve can be moved in two positions:
- an open position, wherein it connects the draining chamber (6) with the outlet (18) for dispensing the cooked and drained pasta, and
- a closed position, wherein it closes the outlet (18) and connects the draining chamber (6) with the water discharge duct (17) for discharging the cooking water.

The actuator (M) of the three valves (V1, V2, V3) can be a motorized actuator comprising an electric motor or a manual actuator comprising a manually operated knob.

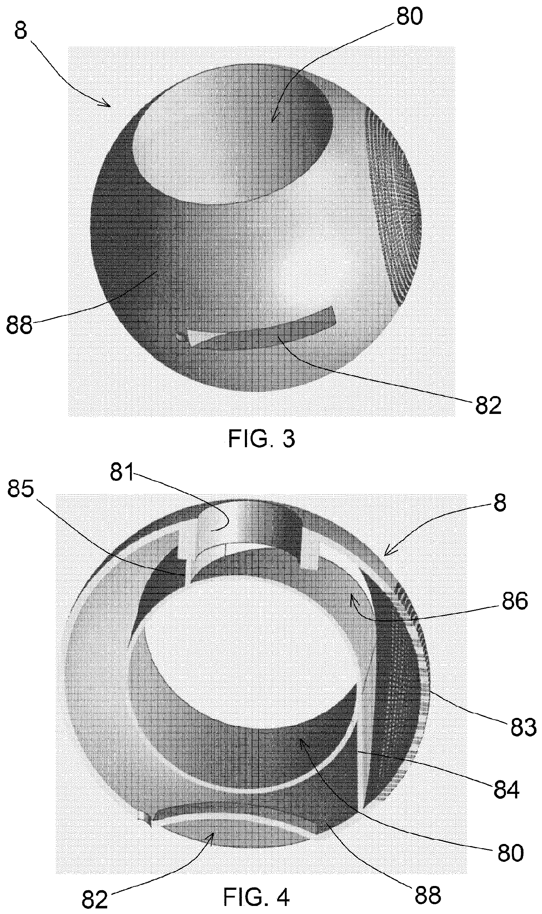

With reference to Figs. 3, 4, 5, and 5A, the shutter (8) of the first, second and third valve is a spherical shutter having a spherical shell (88) and a through cylindrical channel (80). A first housing (81) and a second housing (82) are formed in the shutter, at diametrically opposite positions with respect to an axis of the cylindrical channel (80).

The first housing (81) has a cylindrical shape and an internal thread in which a tang (9) is screwed, integrally revolving with the shutter (8).

The second housing (82) of the shutter has a slotted shape and is suitable for keying a tang (92) of a shaft (93) of the actuator (M). Thus, a rotation of the shaft (93) causes a rotation of the shutter (8) about an axis of rotation orthogonal to the axis of the cylindrical channel (80).

The shutter (8) is rotatably mounted in the body (7) of the valve having a housing (70) wherein the shutter (8) is disposed. The body (7) of the valve has a first attachment (71) and a second attachment (72) wherein the tang (9) and the shaft (93) are rotatably arranged. The attachments (71, 72) of the valve body are disposed in diametrically opposite positions.

The body (7) of the valve has an upper edge (73A) and a lower edge (73B).

An upper conduit (76) is mounted on the upper edge (73A) of the body of the valve. For this purpose, the upper conduit (76) has a flange (76A) that is attached to the upper edge (73A) of the body of the valve by means of welding or screws.

A lower conduit (77) is mounted on the lower edge (73B) of the body of the valve. For this purpose, the lower conduit (77) has a flange (77B) that is attached to the lower edge (73B) of the body of the valve by means of welding or screws.

Supports (74) are arranged in the flanges (76A, 77B) of the upper conduit (76) and of the lower conduit (77) to rotatably support the shutter (8).

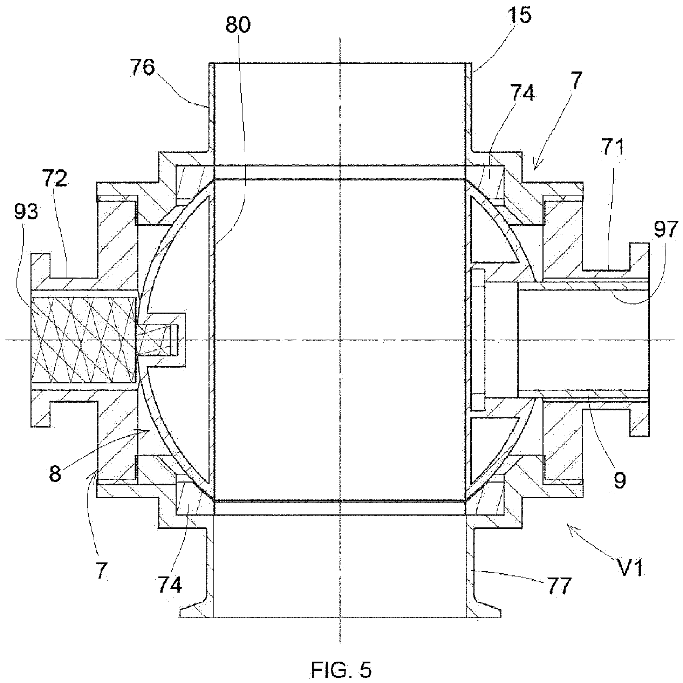

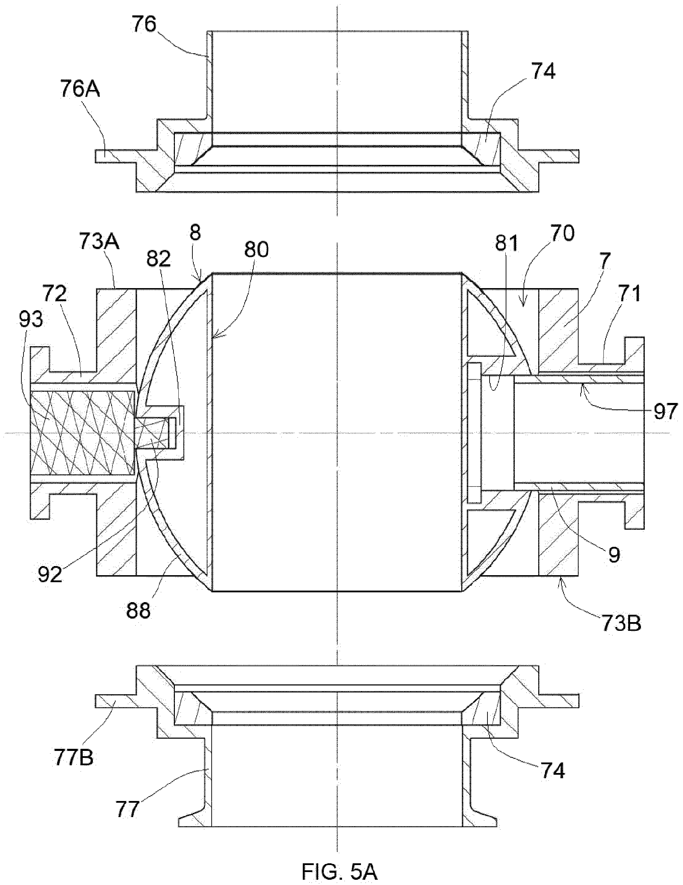

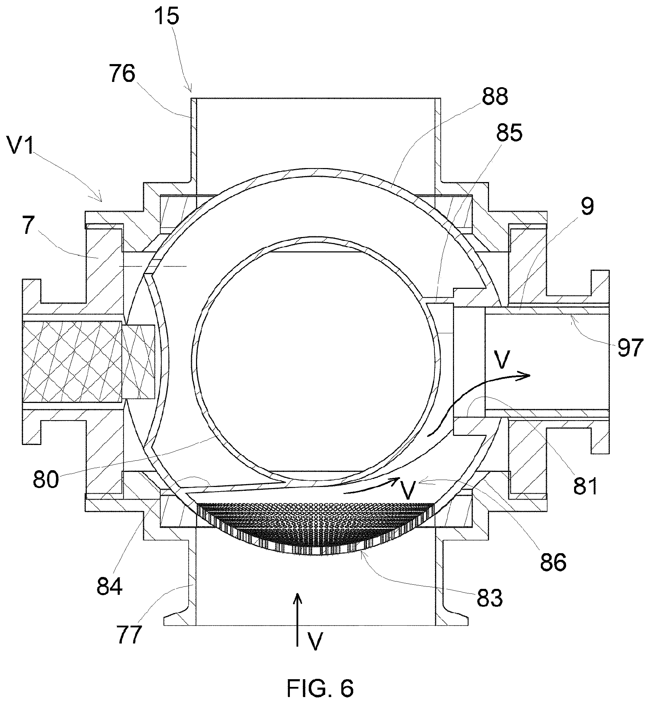

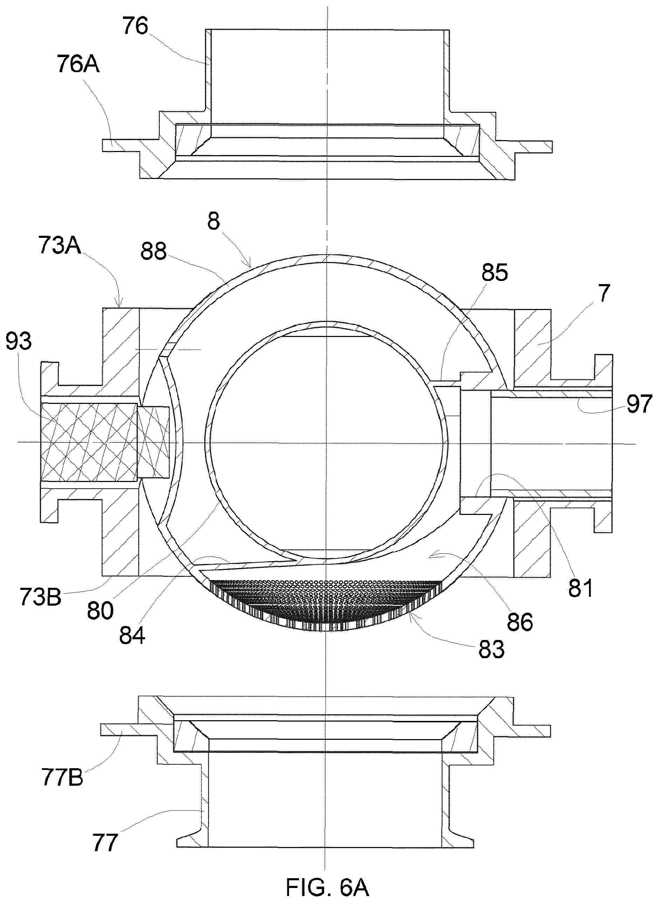

The first upper conduit (76) and the lower conduit (77) are arranged in diametrically opposite positions with axes orthogonal to the axes of the attachments (71, 72). The cylindrical channel (80) of the shutter can be disposed in an open position, wherein it connects the two ducts (76, 77) (Fig. 5) and in a closed position, wherein the two ducts (76, 77) do not communicate with each other (Fig. 6).

The second valve (V2) is a two-way valve, wherein the upper conduit (76) is connected to the outlet (21) of the cooking chamber and the lower conduit (77) is connected to the inlet (60) of the draining chamber. Thus, the shutter (8) of the second valve (V2) can be moved to an open position, wherein it connects the cooking chamber with the draining chamber and a closed position, wherein the cooking chamber is not in communication with the draining chamber.

The first valve (V1) and the third valve (V3) are three-way valves. In such a case, the valves comprise a third conduit (97) formed in the tang (9) engaged in the first housing (81) of the shutter.

Referring to Figs. 4, 6 and 6A, the first housing (81) of the shutter communicates with a perforated portion (83) of the shell (88). A first partition (84) extends from the shell (88) to the cylindrical channel (80) of the shutter near the perforated portion (83). A second partition (85) extends from the shell (88) to the cylindrical channel (80) of the shutter near the first housing (81). The first partition (84) and the second partition (85) define a communication chamber (86) that connects the perforated portion (83) of the shell with the first housing (81).

In the first valve (V1), the perforated portion (83) of the shell has holes with diameter of 0.4-0.5 mm, for instance, suitable for letting the steam pass. On the contrary, in the third valve (V3), the perforated portion (83) of the shell has holes with diameter of 1.4-1.5 mm, suitable for letting the water pass and for preventing the pasta from passing. The perforated portion (83) of the shutter extends for a portion of the spherical shell having a circumference substantially equal to the circumference of the upper and lower conduits (76, 77) of the body of the valve.

In this way, the shutter (8) of the first and third valve can be disposed in two positions:
- an open position, wherein the cylindrical channel (80) of the shutter connects the upper conduit (76) and the lower conduit (77) of the valve, and
- a closed position, wherein the communication chamber (86) connects the third conduit (97) of the valve with the upper conduit (76) or the lower conduit (77) of the valve.

The first valve (V1) is mounted so as to connect the upper conduit (76) to the inlet (15), the lower conduit (77) to the inlet (20) of the cooking chamber, and the third conduit (97) to the steam discharge duct (16). Evidently, the upper conduit (76) can coincide with the inlet (15).

The third valve (V3) is mounted so as to connect the upper conduit (76) to the outlet of the draining chamber, the lower conduit (77) to the outlet (18), and the third conduit (97) to the water discharge duct (17). Evidently, the upper conduit (76) of the third valve can coincide with the draining chamber (6) and the lower conduit (77) can coincide with the outlet (18).

This description continues by illustrating the operation of the machine (100).

Initially, the inlet and outlet valves (12, 13) and the three valves (V1, V2, V3) are in the closed position.

The inlet and outlet valves (12, 13) are opened, and hot water is fed from the boiler (3) to the cooking chamber (2).

The heater (4) heats the hot water in the cooking chamber (2) to the boiling point.

The first valve (V1) is operated to the open position (Fig. 5), then the pasta to be cooked is fed into the inlet (15) and falls by gravity into the cooking chamber (2).

The first valve (V1) is operated by switching from the open position to the closed position (Fig. 6). The perforated portion (83) of the shutter of the first valve is located in the lower conduit (77) of the body of the valve communicating with the cooking chamber (2). Thus, the steam generated in the cooking chamber (2) follows the direction of the arrows V, passes through the perforated portion (83) of the shutter, passes into the communication chamber (6), exits from the third conduit (97), is conveyed towards the steam discharge duct (16) and is discharged into the drain (E).

The recirculation system (5) is operated during the cooking of the pasta in the cooking chamber.

When the cooking of the pasta in the cooking chamber is completed, the second valve (V2) is operated, it being brought from the closed position to the open position, connecting the cooking chamber (2) with the draining chamber (6). The cooked pasta, together with the cooking water, falls by gravity into the draining chamber (6).

With reference to Fig. 7, the third valve (V3) is in the closed position, with the perforated portion (83) of the shutter arranged inside the perforated cylinder (63) of the drainage device. In this way, the pasta is retained by the perforated portion (83) of the shutter and does not fall into the outlet (18).

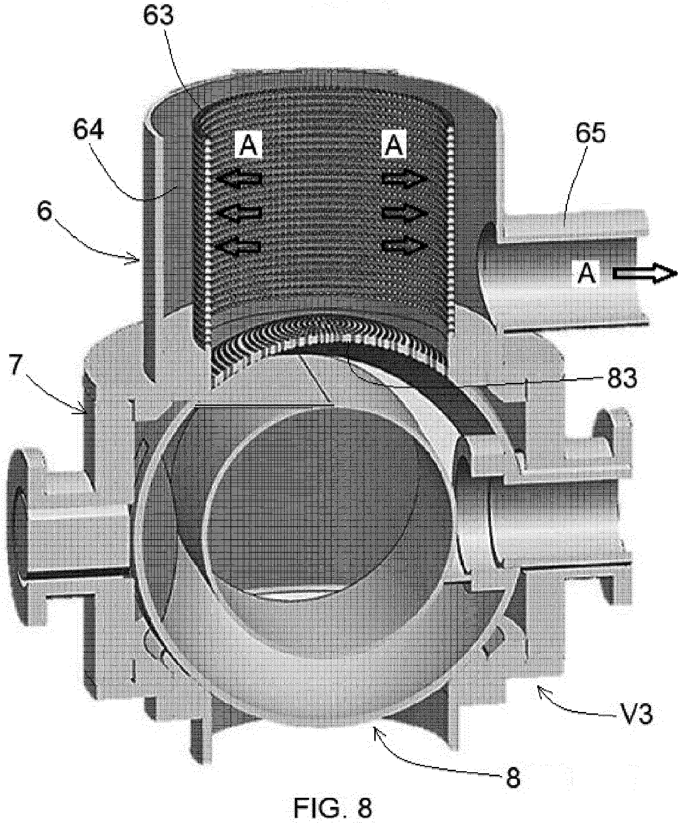

With reference to Fig. 8, the water in the draining chamber (6) follows the direction of the arrows A, exits radially from the perforated cylinder (63), goes into the peripheral gap (64) and exits from the connecting conduit (65), reaching the water discharge duct (17) connected to the drain (E).

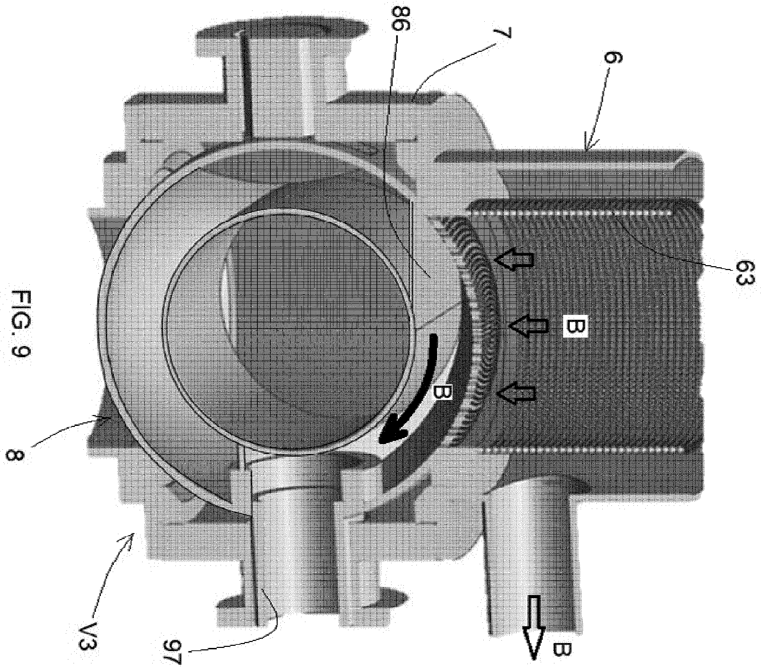

With reference to Fig. 9, the water in the draining chamber (6), follows the direction of the arrows B, passes through the perforated portion (83) of the shutter, reaches the communication chamber (86) of the shutter, and exits from the third conduit (97) of the valve, reaching the water discharge duct (17) connected to the drain (E).

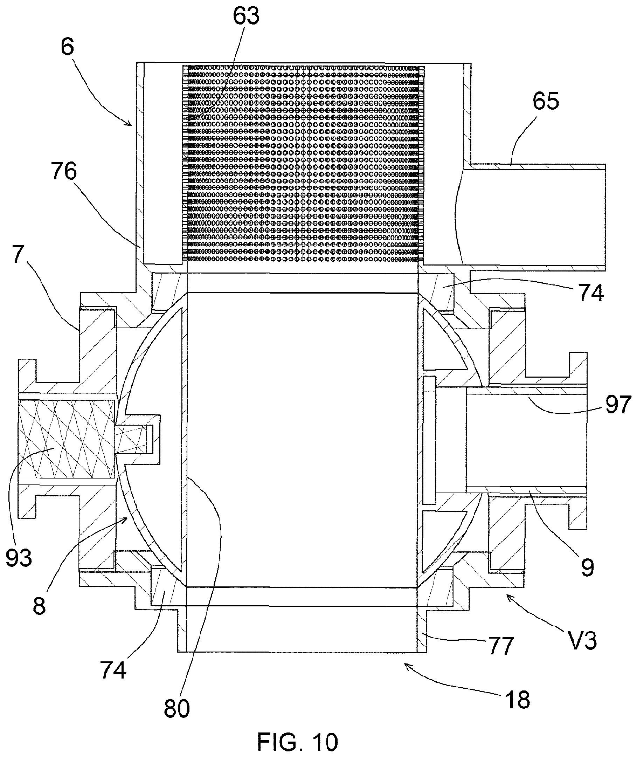

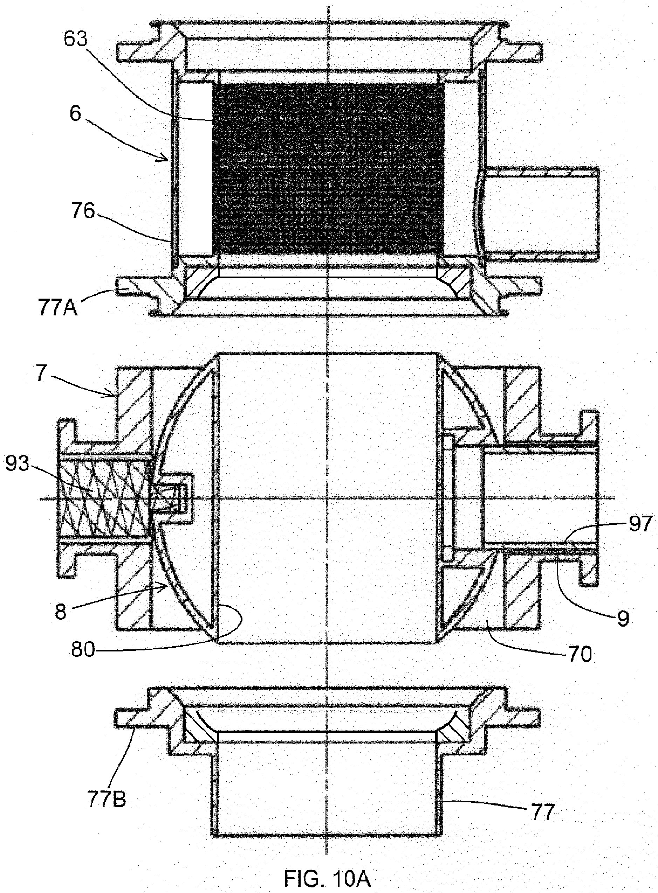

Once the cooking water has been drained, the shutter (8) of the third valve (V3) is operated, it being brought from the closed position to the first open position (Fig. 10), wherein the cylindrical channel (80) of the shutter connects the draining chamber (6) with the outlet (18). Thus, the cooked and drained pasta falls by gravity from the outlet (18) onto a plate arranged on the worktop (101) under the outlet.

Equivalent variations and modifications may be made to the present embodiment of the invention, which are within the reach of a person skilled in the art, but still within the scope of the invention as expressed by the appended claims.

## Claims

1. A pasta cooking machine comprising a cooking unit (1) comprising:
- an inlet (15) for feeding the pasta to be cooked,
- a cooking chamber (2) suitable for containing boiling water for cooking the pasta,
- a draining chamber (6) connected to a water discharge duct (17) for draining the cooking water,
- an outlet (18) for dispensing the cooked and drained pasta,
- a first valve (V1) disposed between the inlet (15) and the cooking chamber (2) and connected to a steam discharge duct (16); said first valve (V1) being provided with a shutter (8) that can be moved to an opening position, wherein it puts the inlet (15) in communication with the cooking chamber (2) for feeding the pasta, and a closing position, wherein it closes the inlet and puts the cooking chamber in communication with the steam discharge duct (16) for discharging the steam from the cooking chamber during cooking,
- a second valve (V2) disposed between the cooking chamber (2) and the draining chamber (6); said second valve (V2) being provided with a shutter (8) that can be moved to an open position, wherein it puts the cooking chamber in communication with the draining chamber, and a closed position, wherein it closes the communication between the cooking chamber and the draining chamber; and
- a third valve (V3) disposed between the draining chamber (6) and the outlet (18) and connected to a water discharge duct (17); said third valve (V3) being provided with a shutter (8) that can be moved to an open position, wherein it puts the draining chamber (6) in communication with the outlet (18) for dispensing the cooked and drained pasta, and to a closed position, wherein it closes the outlet and puts the draining chamber in communication with the water discharge duct (17) for discharging the cooking water from the draining chamber during drainage.

2. The machine according to claim 1, further comprising a heater (4) connected to the cooking chamber (2) for heating the water in the cooking chamber to a boiling temperature.

3. The machine according to claim 1 or 2, further comprising a boiler (3) hydraulically connected to the cooking chamber (2) to supply hot water to the cooking chamber.

4. The machine according to any one of the preceding claims, further comprising a recirculation system (5) hydraulically connected to the cooking chamber to perform a recirculation of hot water in the cooking chamber (2) during cooking.

5. The machine according to any one of the preceding claims, comprising three actuators (M) that operate the shutters (8) of said first, second and third valve, respectively.

6. The machine according to any one of the preceding claims, wherein the shutter (8) of said first, second and third valve is a spherical shutter provided with a shell (88) in the shape of a spherical cap and a through cylindrical channel (80).

7. The machine according to claim 6 when dependent on claim 5, wherein said shutter (8) comprises a first housing (81) that houses a shank (9), and a second housing (82) wherein a shaft (93) of said actuator (M) is keyed.

8. The machine according to claim 7, wherein
said first valve (V1) is a three-way valve;
said body (7) of the first valve comprises an upper conduit (76), a lower conduit (77) and a third conduit (97); wherein the third conduit (97) is formed in said shank (9) disposed in said first housing (81) of the shutter; and
said shell (88) of the shutter (8) of the first valve comprises a perforated portion (83) communicating with the first housing (81) of the shutter via a communication chamber (86).

9. The machine according to claim 7 or 8, wherein
said third valve (V3) is a three-way valve;
said body (7) of the third valve comprises an upper conduit (76), a lower conduit (77) and a third conduit (97); wherein the third conduit (97) is formed in said shank (9) disposed in the first housing (81) of the shutter; and
said shell (88) of the shutter (8) of the third valve comprises a perforated portion (83) communicating with the first housing (81) of the shutter via a communication chamber (86).

10. The machine according to any one of the preceding claims, comprising a pasta dispenser (102), a plate dispenser (103) and a manipulator (106) configured to take the pasta from the pasta dispenser (102) and feed it into the inlet (15) of the cooking unit (1), take the plates from the plate dispenser (103) and dispose them under the outlet (18) of the cooking unit.

## Patentansprüche

1. Maschine zum Kochen von Nudeln, umfassend eine Kocheinrichtung (1), umfassend:
- eine Einspeiseöffnung (15) zum Einspeisen der zu kochenden Nudeln,
- eine Kochkammer (2), die dazu geeignet ist, kochendes Wasser zum Kochen der Nudeln aufzunehmen,
- eine Abtropfkammer (6), die an eine Wasserablassleitung (17) zum Abtropfen des Kochwassers angeschlossen ist,
- eine Ausgabeöffnung (18) zum Ausgeben der gekochten und abgetropften Nudeln,
- ein erstes Ventil (V1), das zwischen der Einspeiseöffnung (15) und der Kochkammer (2) angeordnet ist und mit einer Dampfablassleitung (16) verbunden ist; wobei das erste Ventil (V1) mit einem Schieber (8) versehen ist, der in eine Offenstellung bewegt werden kann, in der die Einspeiseöffnung (15) mit der Kochkammer (2) in Verbindung gesetzt wird, um die Nudeln einzuspeisen, und in eine Geschlossenstellung, in der die Einspeiseöffnung geschlossen ist und die Kochkammer mit der Dampfablassleitung (16) in Verbindung gesetzt wird, um während des Kochens den Dampf aus der Kochkammer abzulassen,
- ein zweites Ventil (V2), das zwischen der Kochkammer (2) und der Abtropfkammer (6) angeordnet ist; wobei das zweite Ventil (V2) mit einem Schieber (8) versehen ist, der in eine Offenstellung bewegt werden kann, in der die Kochkammer mit der Abtropfkammer in Verbindung gesetzt wird, und in eine Geschlossenstellung, in der die Verbindung zwischen der Kochkammer und der Abtropfkammer geschlossen ist; und
- ein drittes Ventil (V1), das zwischen der Abtropfkammer (6) und der Ausgabeöffnung (18) angeordnet ist und mit einer Wasserablassleitung (17) verbunden ist; wobei das dritte Ventil (V3) mit einem Schieber (8) versehen ist, der in eine Offenstellung bewegt werden kann, in der die Abtropfkammer (6) mit der Ausgabeöffnung (18) in Verbindung gesetzt wird, um die gekochten und abgetropften Nudeln auszugeben, und in eine Geschlossenstellung, in der die Ausgabeöffnung geschlossen ist und die Abtropfkammer mit der Wasserablassleitung (17) in Verbindung gesetzt wird, um das Kochwasser während des Abtropfens aus der Abtropfkammer abzulassen.

2. Maschine nach Anspruch 1, ferner umfassend ein Heizelement (4), das mit der Kochkammer (2) verbunden ist, um das Wasser in der Kochkammer auf Siedetemperatur zu erhitzen.

3. Maschine nach Anspruch 1 oder 2, ferner umfassend einen Kessel (3), der hydraulisch mit der Kochkammer (2) verbunden ist, um Warmwasser in die Kochkammer einzuspeisen.

4. Maschine nach einem der vorstehenden Ansprüche, ferner umfassend ein Rückführsystem (5), das hydraulisch mit der Kochkammer verbunden ist, um während des Kochens eine Rückführung von Heißwasser in die Kochkammer (2) vorzunehmen.

5. Maschine nach einem der vorstehenden Ansprüche, umfassend drei Aktoren (M), die die Schieber (8) des ersten, zweiten bzw. dritten Ventils betätigen.

6. Maschine nach einem der vorstehenden Ansprüche, wobei der Schieber (8) des ersten, zweiten und dritten Ventils ein Kugelschieber mit einem Gehäuse (88) in Form einer Kugelkappe und einem zylindrischen Durchgangskanal (80) ist.

7. Maschine nach Anspruch 6, sofern abhängig von Anspruch 5, wobei der Schieber (8) einen ersten Sitz (81) umfasst, in dem ein Schaft (9) angeordnet ist, und einen zweiten Sitz (82), in dem eine Welle (93) des Aktors (M) verkeilt ist.

8. Maschine nach Anspruch 7, wobei
das erste Ventil (V1) ein Drei-Wege-Ventil ist;
der Körper (7) des ersten Ventils eine obere Leitung (76), eine untere Leitung (77) und eine dritte Leitung (97) umfasst; wobei die dritte Leitung (97) in dem Schaft (9) ausgebildet ist, der in dem ersten Sitz (81) des Schiebers angeordnet ist; und
das Gehäuse (88) des Schiebers (8) des ersten Ventils einen gelochten Abschnitt (83) umfasst, der über eine Verbindungskammer (86) mit dem ersten Sitz (81) des Schiebers in Verbindung steht.

9. Maschine nach Anspruch 7 oder 8, wobei
das dritte Ventil (V3) ein Drei-Wege-Ventil ist;
der Körper (7) des dritten Ventils eine obere Leitung (76), eine untere Leitung (77) und eine dritte Leitung (97) umfasst; wobei die dritte Leitung (97) in dem Schaft (9) ausgebildet ist, der in dem ersten Sitz (81) des Schiebers angeordnet ist; und
das Gehäuse (88) des Schiebers (8) des dritten Ventils einen gelochten Abschnitt (83) umfasst, der über eine Verbindungskammer (86) mit dem ersten Sitz (81) des Schiebers in Verbindung steht.

10. Maschine nach einem der vorstehenden Ansprüche, umfassend eine Nudelabgabevorrichtung (102), eine Tellerabgabevorrichtung (103) und ein Handhabungsgerät (106), das ausgebildet ist, um Nudeln aus der Nudelabgabevorrichtung (102) zu entnehmen und sie in die Einspeiseöffnung (15) der Kocheinrichtung (1) einzuspeisen, Teller aus der Tellerabgabevorrichtung (103) zu entnehmen und unter der Ausgabeöffnung (18) der Kochgruppe anzuordnen.

## Revendications

1. Machine pour cuire les pâtes comprenant un groupe de cuisson (1) qui comprend :
- une embouchure d'entrée (15) pour l'alimentation des pâtes à cuire,
- une chambre de cuisson (2) apte à contenir de l'eau bouillante pour cuire les pâtes,
- une chambre d'égouttement (6) connectée à un conduit de vidage de l'eau (17) pour le drainage de l'eau de cuisson,
- une embouchure de sortie (18) pour la distribution des pâtes cuites et égouttées,
- une première soupape (V1) disposée entre l'embouchure d'entrée (15) et la chambre de cuisson (2) et connectée à un conduit de décharge de la vapeur (16) ; ladite première soupape (V1) ayant un obturateur (8) qui peut se déplacer sur une position d'ouverture, où elle met en communication l'embouchure d'entrée (15) avec la chambre de cuisson (2) pour l'alimentation des pâtes, et sur une position de fermeture, où elle ferme l'embouchure d'entrée et met en communication la chambre de cuisson avec le conduit de décharge de la vapeur (16) pour évacuer la vapeur de la chambre de cuisson pendant la cuisson,
- une deuxième soupape (V2) disposée entre la chambre de cuisson (2) et la chambre d'égouttement (6) ; ladite deuxième soupape (V2) ayant un obturateur (8) qui peut se déplacer sur une position d'ouverture, où elle met en communication la chambre de cuisson avec la chambre d'égouttement, et sur une position de fermeture, où elle ferme la communication entre la chambre de cuisson et la chambre d'égouttement ; et
- une troisième soupape (V3) disposée entre la chambre d'égouttement (6) et l'embouchure de sortie (18) et connectée à un conduit de vidage de l'eau (17) ; ladite troisième soupape (V3) ayant un obturateur (8) qui peut se déplacer sur une position d'ouverture, où elle met en communication la chambre d'égouttement (6) avec l'embouchure de sortie (18) pour la distribution des pâtes cuites et égouttées, et sur une position de fermeture, où elle ferme l'embouchure de sortie et met en communication la chambre d'égouttement avec le conduit de vidage de l'eau (17) pour décharger l'eau de cuisson de la chambre d'égouttement pendant l'égouttement des pâtes.

2. Machine selon la revendication 1, comprenant également un réchauffeur (4) connecté à la chambre de cuisson (2) pour réchauffer l'eau dans la chambre de cuisson à une température d'ébullition.

3. Machine selon la revendication 1 ou 2, comprenant également une chaudière (3) connectée hydrauliquement à la chambre de cuisson (2) pour alimenter la chambre de cuisson en eau chaude.

4. Machine selon l'une quelconque des revendications précédentes, comprenant également un système de recirculation (5) connecté hydrauliquement à la chambre de cuisson pour effectuer une recirculation d'eau chaude dans la chambre de cuisson (2) pendant la cuisson.

5. Machine selon l'une quelconque des revendications précédentes, comprenant trois actuateurs (M) qui activent respectivement les obturateurs (8) des susdites première, deuxième et troisième soupape.

6. Machine selon l'une quelconque des revendications précédentes, où l'obturateur (8) des susdites première, deuxième et troisième soupape est un obturateur sphérique ayant une coque (88) en forme de calotte sphérique et un canal cylindrique (80) passant.

7. Machine selon la revendication 6 quand dépendante de la revendication 5, où ledit obturateur (8) comprend un premier emplacement (81) où une tige (9) est disposée et un second emplacement (82) dans lequel est caleté un arbre (93) du susdit actuateur (M).

8. Machine selon la revendication 7, où
ladite première soupape (V1) est une soupape à trois voies ;
ledit corps (7) de la première soupape comprend un conduit supérieur (76), un conduit inférieur (77) et un troisième conduit (97) ; où le troisième conduit (97) est réalisé dans ladite tige (9) disposée dans le premier emplacement (81) de l'obturateur ; et
ladite coque (88) de l'obturateur (8) de la première soupape comprend une portion perforée (83) qui communique avec le premier emplacement (81) de l'obturateur via une chambre de communication (86).

9. Machine selon la revendication 7 ou 8, où
ladite troisième soupape (V3) est une soupape à trois voies ;
ledit corps (7) de la troisième soupape comprend un conduit supérieur (76), un conduit inférieur (77) et un troisième conduit (97) ; où le troisième conduit (97) est réalisé dans ladite tige (9) disposée dans le premier emplacement (81) de l'obturateur ; et
ladite coque (88) de l'obturateur (8) de la troisième soupape comprend une portion perforée (83) qui communique avec le premier emplacement (81) de l'obturateur via une chambre de communication (86).

10. Machine selon l'une quelconque des revendications précédentes, comprenant un distributeur de pâtes (102), un distributeur d'assiettes (103) et un manipulateur (106) configuré pour prélever des pâtes depuis le distributeur de pâtes (102) et alimenter les pâtes dans l'embouchure d'entrée (15) du groupe de cuisson (1), prélever les assiettes depuis le distributeur d'assiettes (103) et disposer les assiettes au-dessous de l'embouchure de sortie (18) du groupe de cuisson.
